# EUROPÄISCHE PATENTANMELDUNG

(11) **EP 4 098 913 A1**
(43) Veröffentlichungstag der Anmeldung: **07.12.2022**
(21) Anmeldenummer: 21000147.5
(22) Anmeldetag: 01.06.2021
(51) Int. Cl.: F16K 7/12, F16K 7/16, F16K 27/02

(54) **MEMBRANVENTIL TIEFSITZ**

(71) Anmelder: Gaida, Gregor, 48-100 Glubczyce (PL)
(72) Erfinder: Gaida, Gregor, 48-100 Glubczyce (PL)

(57) **Zusammenfassung**

Es wird ein Membranventil zur steuerbaren Mediumsströmung angegeben. Der aus Metall hergestellte Körper (1) dieses Membranventils besitzt als Anschlußenden mindestens zwei Rohrstutzen mit im wesentlichen kreisförmigem Querschnitt. Im Membranventilkörper (1) ist mindestens ein Sitz angeordnet, der das schaltende Dichtelement: Membran (3) aufnimmt. Die Anbindung des Antriebs an den Membranventilkörper erfolgt mit Hilfe einer Überwurfmutter (4), oder einer Klemm - Verbindung.

## Beschreibung

Die Erfindung befaßt sich mit der Gestaltung eines Membranventils, welches insbesondere zur Steuerung des Flusses eines Mediums, z.B. einer Flüssigkeit, durch eine Rohrleitung verwendet wird.

Ein Membranventil für sterile Anlagen besteht im wesentlichen aus einem Ventilkörper aus Metall mit mindestens zwei rohrförmigen Rohrstutzen (Anschlußenden) mit einem im wesentlichen kreisförmigen Querschnitt und mindestens einem schaltbaren Dichtelement (Membran), welches mit einem Antrieb (pneumatisch, elektrisch, manuell, etc.) betätigt wird.

Ein Membranventil, welches dem heutigen Stand der Technik entspricht, besitzt am Ventilkörper eine flanschartige Auflagefläche für die Membran. Eine entsprechende flanschartige Auflagefläche besitzt ebenfalls der die Membran betätigende Antrieb. Zwischen den beiden Auflageflächen wird eine meist im Wesentlichen aus Polymer bestehende Membran eingespannt. Die Membranventilkörper der neueren Entwicklungen benutzen eine Körper- und Membrangestaltung, die keine Sitzerhebung besitzen, wie sie z.B. noch im Patent DE000010223824 dargestellt wurde.

Bekannt sind unter anderem die folgenden Patente solcher Ventile:
JP2017180797
US2020309274
WO20003799

Insbesondere die Forderung der leichten Reinigbarkeit und Sterilisierbarkeit, wie sie z.B. gemäß der EHEDG Bestimmungen zu erfüllen ist, fordert dabei eine besondere Abdichtung zwischen dem Ventilkörper und der Membrane.

Hierbei weisen die nach dem bisherigen Stand der Technik konstruierten Ventile Mängel auf.

Um die Totraumfreiheit zu garantieren muß die Verbindungsstelle zwischen den beiden medienberührten Teilen eine definierte und sich nie ändernde Dichtungsstelle aufweisen.

Die drei zuletzt benannten Patente haben jedoch den Nachteil, daß die Abdichtung des Mediendurckes nach Außen, in offener Stellung des Ventiles an anderer Stelle stattfindet als in geschlossener Stellung des Ventiles.

Dies sei an einem Beispiel eines Membranventiles erläutert, das nach wie vor in dieser Form als die meistverkaufte Version verkauft wird.

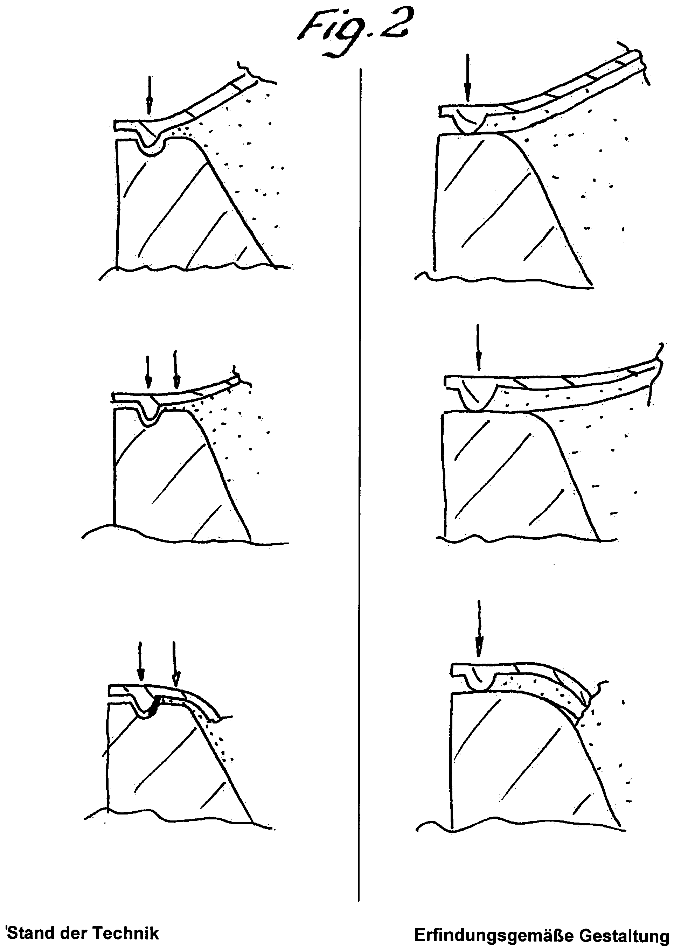

Fig.2 stellt den Vergleich dar zwischen einem Ventil nach dem Stand der Technik (Abbildungen links) und nach einem mit der erfindungsgemäßen Gestaltung (Abbildungen rechts).

In einem sich in der Offenstellung befindenden Ventil nach dem Stand der Technik (oberste Abbildung der linken Seite der Fig.2) findet die Abdichtung des gepunktet dargestellten Mediums an einer nicht näher definierten Stelle statt, wo die Membran in der korrespondierenden Nut des Körpers liegt (siehe Pfeil). Es handelt sich hierbei um die Berührung zweier toroidförmiger Oberflächen (Nut und Wulst). Insbesondere bei PTFE - Membranen werden durch den schwierigen Herstellungsprozess mit ungleichmäßiger Schrumpfung des Membranwulstes Toleranzen entstehen, die den Wulst der PTFE - Membrane ungleichmäßig machen. Die Abdichtung zwischen dem Membranwulst und der Körpernut wird an unterschiedlichen Stellen entlang des Umfangs, teilweise im Nutgrund, teilweise an den Seiten der Nut statfinden. So kann in der Offenstellung des Ventils Medium zwischen den Wulst der Membran und die Nut des Ventilkörpers eindringen. Wenn das Ventil geschlossen wird (Abbildung Fig.2 Mitte links), wird durch das die Membrane schließende Druckstück immer mehr Druck auf die Membrane auch neben der o.g. Nut ausgeübt. Der ausgeübte Druck muß in der Stellung mit geschlossener Membran höher sein als der Mediumsdruck. Durch diesen Druck, der medienseitig neben der Nut ausgeübt wird, dringt das Medium immer tiefer zwischen die Körpernut und die korrespondierende Membranwulst ein. Mit jedem Schaltvorgang wird immer mehr Medium in diesen Bereich transportiert Die hier verbleibenden Medienreste können nicht gereinigt werden mit den üblichen CIP / SIP Verfahren (Clean In Place / Sterilize In Place). Sie können also nicht gereinigt werden, ohne das Ventil zu demontieren. Diese Reste führen, wie in Versuchen an solchen Ventilen aufgezeigt wurde (EHEDG), zu systematischen Verunreinigungen im Membranventil. Solche Verunreinigungen sind die perfekte Basis für das Ausblühen von Pilzen, Sporen und Bakterien. Insbesondere in der Lebensmittel- und Pharmaindustrie können solche Verunreinigungen, innerhalb kürzester Zeit den ganzen Produktionsprozess und auch das Produkt zerstören.

Gerade die Ausgestaltungen mit einem Wulst in der Membran und einer korespondierenden Nut im Ventilkörper führen zu solchen Problemen. Die Abdichtung zur Atmosphäre findet je nach Stellung des Ventils an unterschiedlichen Stellen statt. (Siehe Pfeile).

Ähnliche Lösungen sind z.B. aus der Patentschrift DE 41 30 594 A1 bekannt, die jedoch keine gleichmäßige Anpressung der Membran an den Ventilkörper garantieren. Ein über dem Sitz auf der medienberührten Seite verlaufender, gerader Wulst bedingt dort eine Linienberührung zwischen Membran und Ventilkörper und geht in eine um den Sitz herumlaufende Flächenberührung über. Im Bereich der Flächenberührung und insbesondere im Bereich wo die Kontaktfläche aus einer Linie in eine Fläche übergeht ist keine definierte Verpressung möglich. Undichtigkeiten und Verunreinigungen oder Verkeimungen zwischen Membran und Ventilkörper sind die Folge.

Die Flanschartigen Auflageflächen des Ventilkörpers und des Antriebs werden sehr häufig mit Hilfe von (meist 4) Durchgangsschrauben miteinander verbunden. Durch die dazwischen liegende und meist im Wesentlichen aus Polymer bestehende Membran wird erreicht, daß kein Medium aus dem Membranventilkörper entweichen kann. Die zur Verbindung der Flansche notwendigen Schrauben sind zum größten Teil von außen sichtbar und ungeschützt. In den frei liegenden Spalten der Sicherungsringe, in den Gewindefurchen, etc. kann sich Schmutz sammeln, der insbesondere in sterilen Anlagen (Pharmazie, Lebensmittel- und Biotechnologie) unerwünscht ist. Die Stellen sind schwer zugänglich und nur aufwendig zu reinigen. Desweiteren besteht die Gefahr einer ungleichmäßigen Einspannung der weichen Membran, wenn die Schrauben ungleichmäßig angezogen werden. Dieses Problem versuchen andere Patente zu eliminieren, z.B. WO20203553.

Die Montage ist außerdem insbesondere bei nicht senkrecht eingebauten Membranventilen aufwendig: es sind insgesamt vier (oder mehr) Schrauben mit Muttern, Unterlegscheiben, Sicherungsringen, etc. zu montieren.

Es besteht daher ein Bedarf nach einem Membranventil, welches
- die Abdichtung an gleicher Stelle besitzt, unabhängig der Stellung des Ventils
- die Membran gleichmäßig einspannt
- gut reinigbar ist
- keine freiliegenden Schrauben (oder Schraubenteile) aufweist
- leicht zu montieren ist

Nach der Erfindung wird hierzu eine im wesentlichen rotationssymmetrische, lösbare Verbindung eingesetzt, um den Membranventilkörper und den Antrieb miteinander zu verbinden und die dazwischen auftretenden Kräfte aufzufangen. Nach der Erfindung wird hierzu anstatt von (mehreren) Schrauben nur eine Verbindung benutzt, z.B. über ein Gewinde. Hierzu ist am Membranventilkörper ein Gewindebereich ausgeformt, der die Membran umschließt. Mit Hilfe einer Überwurfmutter, die über ein zum Membranventilkörper korrespondierendes Gewinde verfügt wird der Antrieb am Membranventilkörper befestigt und spannt die zwischen diesen Bauteilen liegende Membran ein.

Gegebenenfalls kann zur Anbindung des Antriebs an den Membranventilkörper auch eine Klemm - Verbindung benutzt werden. Hierbei verfügen der Membranventilkörper und der Antrieb jeweils über einen rotationssymetrischen Vorsprung. Mit Hilfe einer im wesentlichen rotationssymmetrischen Schelle kann der Membranventilkörper und der Antrieb miteinander verbunden werden.

Zusammenfassend ist es daher bei der erfindungsgemäßen Gestaltung des Membranventils wesentlich, daß die Membran, die auf der medienberührten Seite in jeder Stellung des Ventils nur eine definierte Linienberührung zwischen der Membran und dem Ventilkörper hervorruft und daß die Anbindung des Membranventilkörpers an den Antrieb im wesentlichen aus einer rotationssymmetrischen, lösbaren Verbindung besteht. Dies wird anschaulich in der Fig.2 durch die drei rechts liegenden Abbildungen verdeutlicht.

Die Erfindung wird nachstehend an Hand einer bevorzugten Ausführungsform unter Bezug auf die beigefügte Zeichnung näher erläutert.

Darin zeigt:

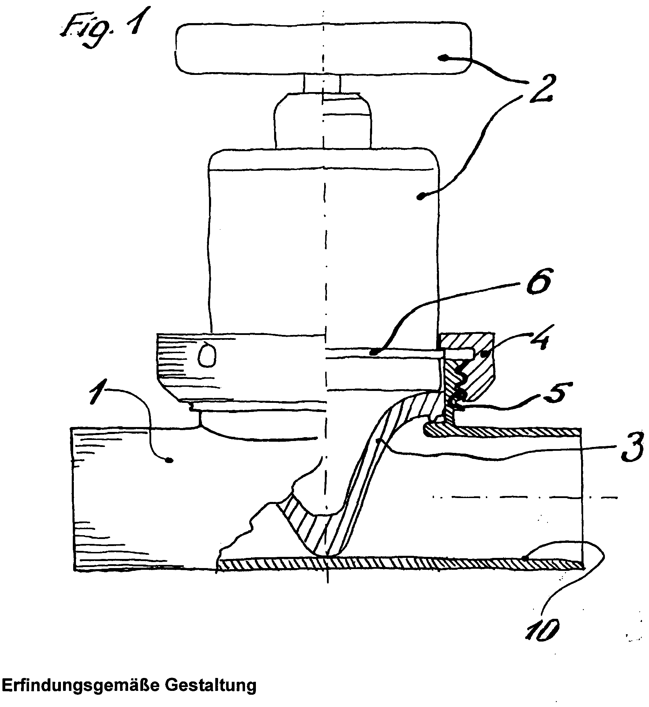

**Fig.1** Eine schematische, geschnittene Ansicht eines erfindungsgemäßen Membranventils.
**Fig.2** Auf der linken Seite: eine schematische Darstellung der unterschiedlichen Dichtungsstelle eines nach dem Stand der Technik aufgebauten Ventiles, je nach Stellung der Mermbran. Auf der rechten Seite: die stets identische und definierte Linienberührung zwischen Membran und Körper, unabhängig von der Stellung der Membran.
**Fig.3** Eine schematische Darstellung der erfindungsgemäßen Membran

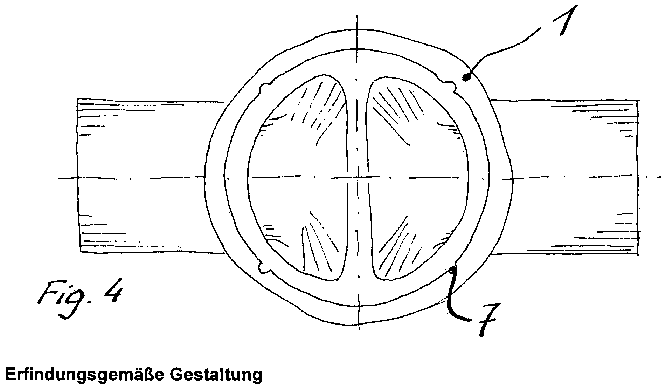

**Fig.4** Eine schematischen Draufsicht auf den erfindungsgemäßen Körper

Die Aufgabe wird erfindungsgemäß dadurch gelöst, daß der Membranventilkörper 1 des Membranventils über ein Zentralgewinde 5 verfügt.

Die Vorzugsweise runde, insbesondere im wesentlichen aus Polymer bestehende Membran 3 wird zwischen dem aus Metall gefertigten Membranventilkörper 1 und dem Antrieb 2 gespannt. Hierzu wird die Überwurfmutter 4 auf das Zentralgewinde 5 des Membranventilkörpers 1 geschraubt. Die Überwurfmutter 4 überträgt die im Zentralgewinde 5 entstehende Kraft über einen Vorsprung 6 auf den Antrieb 2, der wiederum die Membran 3 an den Membranventilkörper 1 anpreßt.

Vorzugsweise besteht der Membranventilkörper 1, der Antrieb 2 und die Überwurfmutter 4 aus Metall, insbesondere aus rostfreiem Edelstahl.

Das am Membranventilkörper 1 und der Überwurfmutter 4 angebrachte Gewinde ist vorzugsweise ein leicht zu reinigendes Gewinde. Insbesondere ist das Gewinde ein eingängiges Rundgewinde (z.B. Rundgewinde nach DIN 405).

Gegebenfalls kann die Verbindung des Membranventilkörpers 1 mit dem Antrieb 2 mit Hilfe einer Klemm - Verbindung wie sie bereits für Rohrleitungen ähnlich definiert worden sind, (z.B. nach DIN 32676, oder nach SMS 3017) erfolgen.

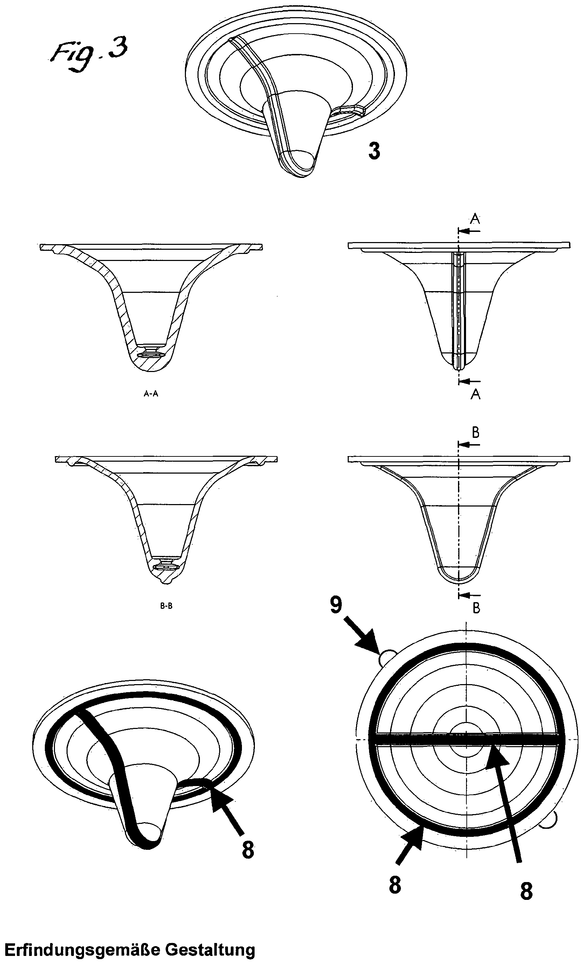

Vorzugsweise hat ein solches Membranventil eine im wesentlichen rotationssymmetrische Membran 3, und insbesondere eine Membran 3, die über einen umlaufenden Dichtwulst 8 verfügt, der zusätzlich entlang der Membranmittelachse, wie in **Fig.3** dargestellt, verläuft und deren Verlauf dadurch der Form des griechischen Buchstabens Q ähnelt (siehe Fig.3 unten rechts).

Damit der entlang der Membranmittelachse verlaufende Teil des Dichtwulstes 8 der Membran 3, bezogen auf die Drehung um die Achse der Rotationssymmetrie der Membran, nur in bestimmten Stellungen auf dem Membranventilkörper 1 zu liegen kommt, verfügt die Membran über eine oder mehrere Ausbuchtungen 9. Diese Ausbuchtungen werden mit einer oder mehreren entsprechenden Einbuchtungen 7 des Körpers in Deckung gebracht, so daß nur bestimmte Drehungen der Membran relativ zum Körper um die Rotationssymmetrieachse der Membran möglich sind. Damit wird sichergestellt, daß der "Querstrich" des Buchstabens Q, des Dichtwulstes der Membran, immer genau über dem Sitz des Membranventilkörpers zum Liegen kommt.

Vorzugsweise besitzt ebenfalls der Antrieb 2 ähnliche Ausbuchtungen wie die Membran 3 , so daß auch der Antrieb 2 relativ zum Körper 1 nur in bestimmten Stellungen um die Rotationssymmetrieachse der Membran montiert werden kann.

Die Lösung ist auf alle Antriebsarten: pneumatisch, elektrisch, etc. übertragbar. Zur Vereinfachung wurde lediglich ein manueller Antrieb abgebildet.

### Bezugszeichenliste

- **1**: Membranventilkörper
- **2**: Antrieb (manuell)
- **3**: Membran
- **4**: Überwurfmutter
- **5**: Zentralgewinde
- **6**: Vorsprung
- **7**: Einbuchtung
- **8**: Dichtwulst
- **9**: Ausbuchtung
- **10**: Linie in der Rohrleitung

## Patentansprüche

1. Membranventil zur steuerbaren Fluiddurchströmung, **dadurch gekennzeichnet, daß** dessen im wesentlichen rotationssymmetrische Membran (3) über einen ununterbrochenen und komplett auf der medienberührten Seite der Membran liegenden Dichtwulst (8) verfügt, der sowohl um die Membran kreisförmig umlaufend ist und der zusätzlich entlang der Membranmittelachse verläuft, so daß der Verlauf des Dichtswulstes (8) dadurch der Form des griechischen Buchstabens Q ähnelt und wobei auf der medienberührten Oberfläche des korrespondierenden Membranventilkörpers (1) zumindest eine stetige und ununterbrochene Gerade (10) entlang des Membranventilkörpers (1) gezogen werden kann, die von einem Stutzenende zum anderen Stutzenende reicht.

2. Membranventil zur steuerbaren Fluiddurchströmung, nach Anspruch 1 wobei die Verbindung zwischen dem aus Metall hergestellten Membranventilkörper (1) und dem aus Metall hergestellten Antrieb (2) mit Hilfe einer lösbaren, im wesentlichen rotationssymmetrischen Verbindung erfolgt.

3. Membranventil nach einem oder mehreren der Ansprüche 1 und 2, **dadurch gekennzeichnet, daß** der Membranventilkörper (1) über ein Zentralgewinde verfügt und der Antrieb (2) mit Hilfe einer Überwurfmutter (4) an den Membranventilkörper (1) geschraubt wird.

4. Membranventil nach einem oder mehreren der Ansprüche 1 bis 3, **dadurch gekennzeichnet, daß** der Antrieb (2) über ein Zentralgewinde verfügt und der Membranventilkörper (1) mit Hilfe einer Überwurfmutter (4) an den Antrieb (2) geschraubt wird.

5. Membranventil nach einem oder mehreren der Ansprüche 1 bis 4, **dadurch gekennzeichnet, daß** für das verbindende Gewinde ein leicht zu reinigendes Gewinde (z.B. Rundgewinde nach DIN 405) verwendet wird.

6. Membranventil nach einem oder mehreren der Ansprüche 1 bis 5 **dadurch gekennzeichnet, daß** der Membranventilkörper mit Hilfe einer KlemmVerbindung mit dem Antrieb verbunden wird.

7. Membranventil nach einem oder mehreren der Ansprüche 1 bis 6, **dadurch gekennzeichnet, daß** der Membranventilkörper (1) über eine oder mehrere Ausbuchtungen, oder Einbuchtungen (7) verfügt und daß die Membran (3) über korrespondierende Einbuchtungen oder Ausbuchtungen (9) verfügt, so daß die Membran (3) nur in definierten Stellungen um die Rotationsssymmetrieachse der Membran an den Membranventilkörper (1) befestigt werden kann.
